# EUROPÄISCHE PATENTSCHRIFT

(11) **EP 2 111 736 B1**
(45) Veröffentlichungstag und Bekanntmachung des Hinweises auf die Patenterteilung: **04.07.2012**
(21) Anmeldenummer: 09155967.4
(22) Anmeldetag: 24.03.2009
(51) Int. Cl.: A01D 34/73, A01D 34/00

(54) **Messerbalken**
Knife bar
Barre porte-lames

(30) Priorität: 25.04.2008 DE 102008021023
(43) Veröffentlichungstag der Anmeldung: 28.10.2009
(73) Patentinhaber: SABO-Maschinenfabrik GmbH, 51645 Gummersbach (DE)
(72) Erfinder: Dzierzewski, Jürgen, 51674, Wiehl (DE)
(74) Vertreter: Löser, Iris

(56) Entgegenhaltungen:
- DE-A1- 19 528 832
- US-A- 5 299 414
- US-A- 5 327 710
- US-A- 5 442 902
- US-B1- 6 490 850

## Beschreibung

Die Erfindung betrifft einen Messerbalken, insbesondere für ein Mähgerät, sowie ein Mähgerät bzw. Mähwerk.

Zur Rasenpflege werden häufig Rasenmäher verwendet, die eine oder mehrere Trenneinrichtungen in der Art von Schneidmessern aufweisen, welche Gras bzw. Vegetation abtrennen. Das abgetrennte Gut wird durch eine entsprechende Öffnung in dem Gehäuse des Rasenmähers abgegeben und auf dem gemähten Rasen abgelegt oder durch einen an die Öffnung angrenzend angeschlossenen Fangsack aufgenommen. Sowohl die auf dem Rasen abgelegten Gutabschnitte als auch die durch den Fangsack aufgenommenen müssen beseitigt bzw. entsorgt werden. Um diesem Problem entgegenzuwirken, sind Rasenmäher im Einsatz, welche eine sogenannte Mulchfunktion aufweisen, d.h. das Gras wird nicht nur abgetrennt, sondern durch speziell ausgebildete Trenneinrichtungen fein zerkleinert und auf dem gemähten Rasen abgelegt bzw. in diesen eingeblasen. Auf diese Weise entfällt nicht nur das Problem der Entsorgung, sondern die abgetrennten Pflanzenabschnitte werden dem Rasen als biologischer Dünger wieder zugeführt und wirken darüber hinaus als Feuchtigkeitsspeicher.

Die DE-A1-10042086 zeigt einen Messerbalken mit Flügelenden, die als gegenüber der Umlaufebene des Messers schräggestellte Leitflächen ausgebildet sind, die ausgehend von den in Umlaufrichtung vorderen Längskanten der Messerflügel zu den hinteren Längskanten hin einen ansteigenden Verlauf haben. Ein äußerer Schneidenabschnitt ist derart profiliert, dass dieser unterhalb der Ebene des Nabenteils liegt.

Die US-B1-6,490,850 zeigt einen Messerbalken mit einer führenden Wischkante, die sich unterhalb der Schneidkante erstreckt.

Die US-A-5,442,902 zeigt einen Messerbalken mit einem Paar erhöhter Rippen, die zwischen der mittleren Naben und den äußeren Enden der Schneidbereiche erstrecken.

Die DE-A1-195 28 832 zeigt ein Mähmesser bei dem die Schneiden der Messerflügel mehrere Schnittebenen bilden.

Die US-A-5,327,710 zeigt ein Mulchmesser mit einer diagonalen Kante, die sich an den Messerspitzen etwa 20° nach oben erstreckt, einem benachbarten rückwärtigen Messerausschnitt und einer beabstandeten, sich nach unten erstreckenden Kante.

Die der Erfindung zugrunde liegende Aufgabe wird darin gesehen, die Mulchwirkung bekannter Messerbalken zu verbessern.

Diese Aufgabe wird erfindungsgemäß durch die Lehrele des Patentanspruchs 1 gelöst, wobei in den weiteren Patentansprüchen Merkmale aufgeführt sind, die die Lösung in vorteilhafter Weise weiterentwickeln.

Auf diese Weise wird ein Messerbalken zur Verfügung gestellt, welcher ein verbessertes aerodynamisches Verhalten aufweist.

Weist der Messerbalken Schneidbereich bzw. Schneidkanten auf, welche vertikal beabstandet sind bzw. sich in unterschiedliche, zumindest im Wesentlichen horizontalen Ebenen erstrecken, so kann das zu schneidende Pflanzenmaterial in unterschiedlichen Höhen bzw. mehrfach geschnitten werden. Auf diese Weise wird eine besonders gründliche Zerkleinerung gefördert und somit die Mulchwirkung begünstigt. Es können zwei, aber auch drei oder mehr derartige Schneidkanten vorgesehen sein.

Weist der Messerbalken bzw. das Trennblatt des Messerbalkens Mulchbuckel auf, so können diese das gemähte Gut zusätzlich beschleunigen bzw. es ablenken, wodurch eine weitere Zerkleinerung gefördert wird.

Sind zwischen den Schneidbereichen Übergänge vorgesehen, welche wiederum als Schneiden ausgebildet sind, so tragen diese zu einer Zerkleinerung des Schnittguts bei. Darüber hinaus können derartige Übergänge, insbesondere wenn sie unterschiedlich steil ausgebildet sind, das Schnittgut lenken bzw. weiter beschleunigen, um so die Mulchwirkung weiter zu begünstigen.

Ist das Trennblatt bereichsweise mit einer Vertiefung oder einer Sicke versehen, so kann dies die Stabilität des Trennblatts erhöhen. Eine derartige Vertiefung bzw. Sicke ist vorzugsweise in einem Übergangsbereich zwischen dem/den Schneidbereich(en) und einem zentralen bzw. Anschlussbereich des Trennblatts vorgesehen.

In einem nacheilenden Bereich des Trennblatts können Folgebereiche vorgesehen sein, welche bzw. deren nacheilende Kanten vorzugsweise im Betrieb unterhalb der Schneidkanten angeordnet sind bzw. in einer tiefen Ebene rotieren. Auf diese Weise können die Folgebereiche in der Art einer Kehreinrichtung wirken und geschnittenes Gras bzw. Gut gleichmäßig verteilen und/oder tief in den gemähten Rasen einarbeiten, so dass ein besonders gutes Mulchbild entsteht.

Ein erfindungsgemäßer Messerbalken kann an handgeführten wie auch handgeschobenen Mähgeräten oder auch an Mähwerken für selbstfahrende Fahrzeuge oder an durch solche gezogene oder geschobene Mähwerken verwendet werden. Es kann sich hierbei um spezielle Mulchgeräte handeln, welche ein zumindest im Wesentlichen geschlossenes Gehäuse aufweisen. Aber auch der Einsatz an eine oder mehrere Auswurföffnung(en) aufweisende Mähgeräten bzw. Mähwerken ist möglich, wobei diese Auswurföffnungen zur Erzielung einer verbesserten Mulchleistung verschlossenen werden können.

In der Zeichnung ist ein nachfolgend näher beschriebenes Ausführungsbeispiel der Erfindung dargestellt. Es zeigt:
- Fig. 1: eine Seitenansicht eines Mähgeräts zur Rasen-, Garten- und Grundstückspflege, wobei ein Gehäuse des Mähgeräts teilweise aufgebrochen dargestellt ist, so dass ein im Innern des Gehäuses angeordneter Messerbalken sichtbar wird,
- Fig. 2: eine Ansicht des erfindungsgemäßen Messerbalkens in einer perspektivischen Darstellung,
- Fig. 3: eine Seitenansicht des Messerbalkens aus Figur 2 betrachtet und
- Fig. 4: eine Ansicht des Messerbalkens aus Fig. 2 und 3 von oben betrachtet.

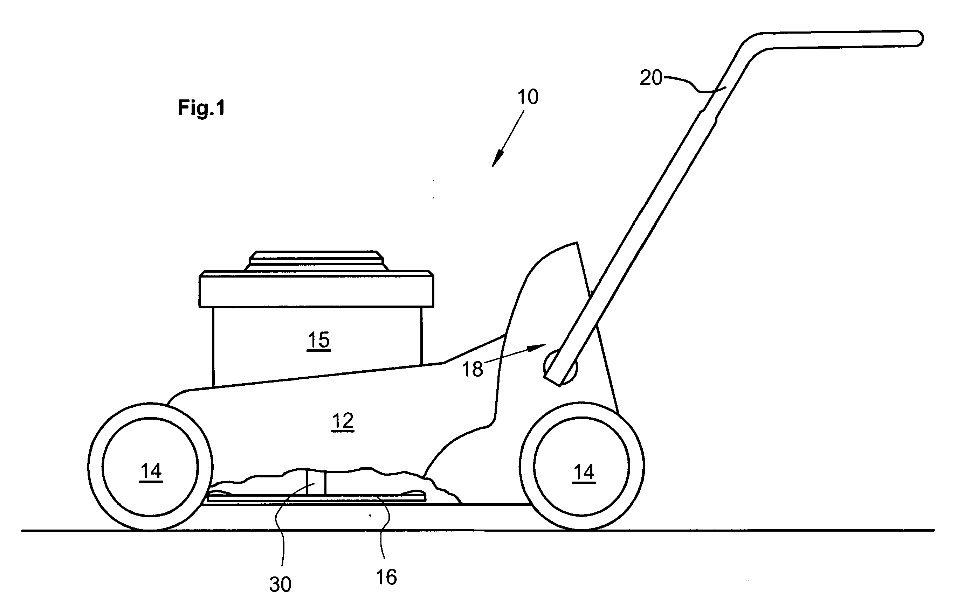

Es wird zuerst auf Fig. 1 Bezug genommen, in der ein Mähgerät 10 in der Art eines handgeführten oder auch handgeschobenen Rasenmähers gezeigt wird. Das Mähgerät 10 weist ein in Bodenrichtung geöffnetes Gehäuse 12 auf, das sich über zwei vordere und zwei rückwärtige Räder 14 auf dem Untergrund abstützt. An dem Gehäuse 12 ist ein nur andeutungsweise dargestellter Antrieb 15, beispielsweise in der Art eines Verbrennungsmotors oder auch eines Elektroantriebs vorgesehen, um ein unterhalb des Gehäuses 12 angebrachtes Mähmesser bzw. einen Messerbalken 16 anzutreiben, um Gras bzw. Pflanzenwuchs zu schneiden. An dem rückwärtigen Bereich 18 des Gehäuses 12 ist ein Führungsholm 20 angebracht.

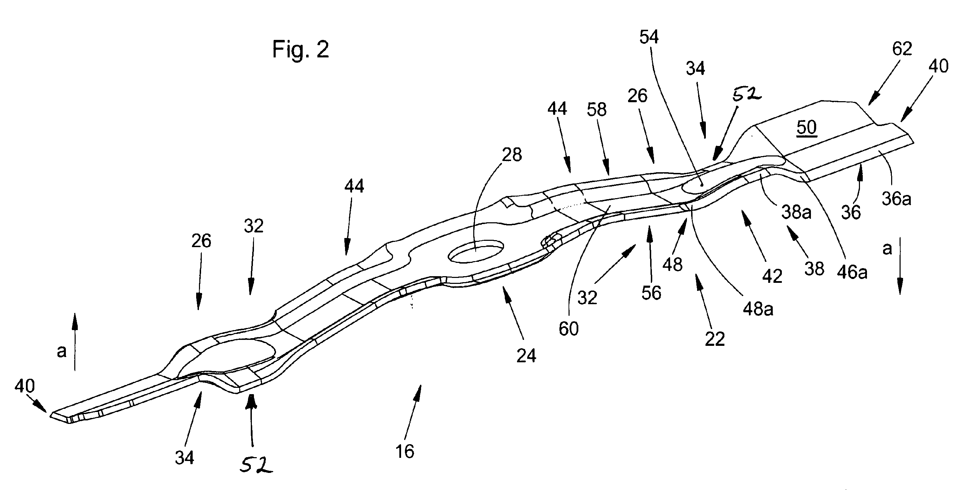

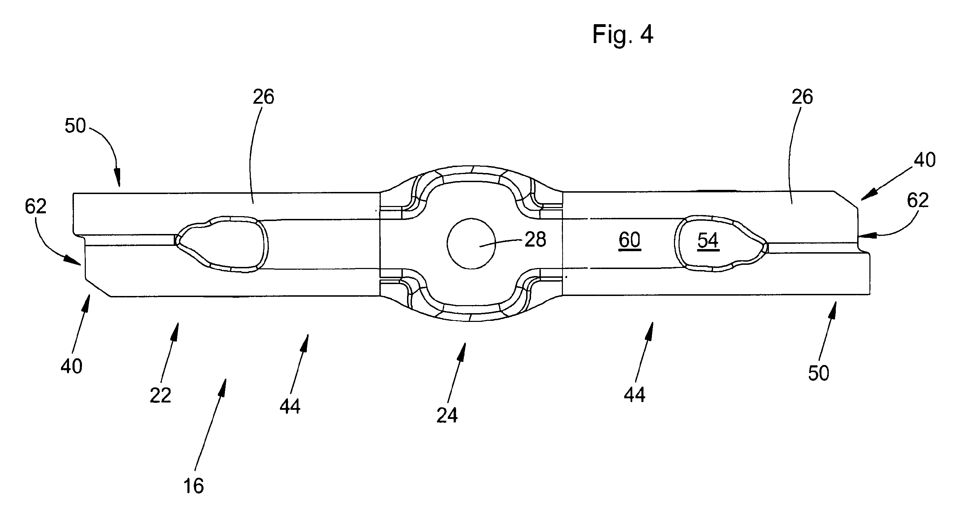

Es wird nun auf Fig. 2 bis 4 Bezug genommen, in denen der Messerbalken 16 genauer dargestellt wird. Der Messerbalken 16 weist ein im Wesentlichen längliches Trennblatt 22 auf. Das Trennblatt 22 wiederum weist einen zentralen Bereich 24 sowie zwei an diesen zentralen Bereich 24 anschließende äußere Bereiche bzw. Trennarme 26 auf, welche bezogen auf den zentralen Bereich 24 symmetrisch ausgebildet sind.

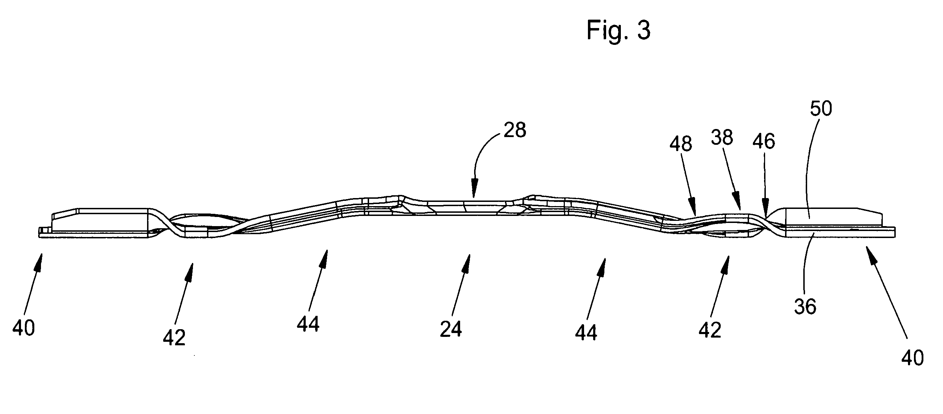

Der zentrale Bereich 24 ist in im Wesentlichen konventioneller Weise in der Art eines Anschlussbereichs ausgebildet. Ein derartiger Anschlussbereich kann, wie dies in den Figuren 2 und 3 dargestellt ist, eine zentrale Öffnung 28 zum Aufsetzen des Messerbalkens 16 auf eine in Figur 1 gezeigte, sich im Betrieb in Rotation befindender Welle 30 aufweisen. Der Messerbalken 16 wird durch geeignete bekannte Mittel, die nicht dargestellt sind auf der Welle 30 befestigt. Alternativ kann der Messerbalken 16 bzw. der zentrale Bereich 24 zwei oder mehrere Öffnungen bzw. Bohrungen aufweisen, mittels der der Messerbalken 16 an einem mit der Welle 30 verbundenen Anschlussflansch angeschlossen werden kann. Weitere Ausgestaltungen sind denkbar.

Die Trennarme 26 weisen einen bezogen auf die Drehrichtung (Pfeil a) des Messerbalkens 16 voreilenden Bereich 32 und einen nacheilenden Bereich 34 auf.

Der voreilende Bereich 32 weist einen ersten Schneidbereich 36 mit einer ersten Schneidkante 36a und einen zweiten Schneidbereich 38 mit einer zweiten Schneidkante 38a auf, wobei der erste Schneidbereich 36 angrenzend an einen äußeren, dem zentralen Bereich 24 abgelegenen Endbereich 40 des Trennblatts 22 angeordnet ist. Der zweite Schneidbereich 38 grenzt im Wesentlichen innen bzw. in einem dem zentralen Bereich 24 zugewandten Bereich 42 des Trennblatts 22 an den ersten Schneidbereich 36 an.

Es wird nun insbesondere auf die Figur 3 Bezug genommen, aus der deutlich wird, dass der erste Schneidbereich 36 und der zweite Schneidbereich 38 im Betrieb bzw. in eingebauten Zustand in unterschiedlichen Ebenen in der Art angeordnet sind, dass der zweite Schneidbereich in eingebautem Zustand bzw. im Betrieb des Mähgeräts oberhalb des ersten Schneidbereichs angeordnet ist. An den zweiten Schneidbereich 38 schließt sich in Richtung des zentralen Bereichs 24 ein nicht mit einer Schneide versehener Übergangsbereich 44 an.

Die Schneidbereiche 36, der Bereich 42 und der Übergangsbereich 44 können als Hauptebenen des Messerbalken 16 bzw. des Trennblatts 22 betrachtet werden und sind jeweils gegeneinander verschränkt.

Insbesondere aus Figur 3 wird deutlich, dass der erste Schneidbereich 36 und der zweite Schneidbereich 38 sowie der zweite Schneidbereich und der Übergangsbereich 44 sanfte, Radien aufweisende Übergänge 46, 48 aufweisen, wobei der nach oben aufsteigende Übergang 46 zwischen dem ersten Schneidbereich 36 und dem zweiten Schneidbereich 38 steiler ausgebildet ist als der absteigende Übergang 48 zwischen dem zweiten Schneidbereich 38 und dem Übergangsbereich. Die Übergänge 46, 48 weisen bezogen auf das Trennblatt 22 als solches voreilenden Schneidkanten 46a, 48a auf. Es ergibt sich eine Abfolge der Schneidkanten 36a, 46a, 38a, 48a von außen nach innen betracht, die von tief über hoch nach mittig gestaffelt ist.

Der zentrale Bereich 24 wiederum ist in eingebautem Zustand bzw. im Betrieb oberhalb des ersten sowie des zweiten Schneidbereichs 36, 38 angeordnet. Der Übergangsbereich 44 reicht von dem Übergang 48 zu dem zentralen Bereich 24 und steigt von Übergang 48 zu dem zentralen Bereich sanft bzw. in abgerundeter Art und Weise an.

In dem nacheilenden Bereich ist in dem äußeren Bereich 40 des Trennblatts ein nach oben gebogener Mulchflügel 50 angeordnet. An diesen schließt sich dem voreilenden Bereich 42 gegenüberliegender Folgebereich 52 an, der wiederum über den Übergangsbereich 44 in den zentralen Bereich 24 übergeht. Der Mulchflügel 50 schließt sich an den Schneidbereich 36 an und steigt bezogen auf diesen zu seinem Ende hin an und läuft in Richtung des Folgebereichs 52 aus.

An den jeweiligen Mulchflügel und dem äußeren Schneidbereich 36 weist das Trennblatt 22 bzw. die Trennarme 26 zwischen dem voreilenden Bereich 42 und dem nacheilenden Folgebereich 52 jeweils einen nach oben ragenden Mulchbuckel 54 auf, welcher sanft von dem voreilenden Bereich 42 ansteigt und ebenso in den Folgebereich 52 ausläuft.

An den Mulchbuckel 54 anschließend weist der Übergangsbereich 44 zwischen seinem voreilenden Abschnitt 56 und seinem nacheilenden Abschnitt 58 einen vertieften Bereich 60, in der Art einer Sicke auf, der sich im eingebauten Zustand bzw. im Betrieb nach unten erstreckt und in den Mulchbuckel 54 sanft übergeht.

Die äußeren Endbereiche 40 weisen jeweils Abkantungen 62 in der Art auf, dass der äußere Schneidbereich 36 über den Mulchflügel 50 hinausragt.

Die Position und Lage der Schneidbereiche 36,38 und Übergänge 46, 48 bzw. der Schneidkanten 36a, 46a, 38a, 48a, der Bereiche bzw. Hauptebenen 36, 53, 44 des Trennblatts 22 und der Mulchflügel 50 ergeben im Mulchbetrieb maßgebliche Vorteile. Der erste Schneidbereich schneidet zunächst vom stehenden Grashalm ab. Durch die gegenläufig verschränkten Bereiche 36 und 42 wird ein Transport des geschnittenen Guts weiter nach innen erzielt. Im Bereich der Schneidkante 38a wird das Schnittgut erstmalig weiter zerkleinert. Dem im Bereich 42 erzeugten nach unten gerichteten Luftstrom wirkt der angestellt Übergang 48 bzw. die angestellte Schneidkante 48a in Kombination mit dem Mulchbuckel 54 entgegen, so dass das Gras in Aufwärtsrichtung transportiert wird und ein weiteres mal zerkleinert wird. Dieser Vorgang wiederholt sich mehrfach in Abhängigkeit von Grasart, Grasvolumen und Feuchtigkeit, sodass eine weitestgehende Zerkleinerung des Schnittguts stattfinden kann.

## Patentansprüche

1. Messerbalken (16), insbesondere für ein Mähgerät (10), mit gegenüberliegenden Endbereichen (40), mit im Betrieb voreilenden Schneidbereich (36) mit Schneidkanten (36a) und mit nacheilenden Mulchflügel (50) und mit weiteren Schneidbereichen (38) mit Schneidkanten (38a), wobei an die weiteren Schneidbereiche (38) angrenzend ein Übergangsbereich (44) vorgesehen ist und angrenzend an den/die Schneidbereiche (36, 38) Mulchbuckel (54) vorgesehen sind, **dadurch gekennzeichnet, dass** der Übergangsbereich eine vorzugsweise an den Mulchbuckel (54) angrenzende Vertiefung in der Art einer nach unten reichenden Sicke aufweist.

2. Messerbalken nach Anspruch 1, **dadurch gekennzeichnet, dass** die weiteren Schneidbereichen (38) mit Schneidkanten (38a) im Betrieb oberhalb der ersten Schneidbereiche (36) bzw. Schneidkanten (36a) angeordnet sind

3. Messerbalken nach Anspruch 1 oder 2, **dadurch gekennzeichnet, dass** der Übergangsbereich (44) keine Schneidkante aufweist.

4. Messerbalken nach einem oder mehreren der vorherigen Ansprüche, **dadurch gekennzeichnet, dass** die zweiten Schneidbereiche (38) bezogen auf die ersten Schneidbereiche (36) einem zentralen Bereich (24) des Messerbalkens (16) zugewandt sind.

5. Messerbalken nach einem oder mehreren der vorherigen Ansprüche, **gekennzeichnet durch** einen nacheilenden Folgebereich (52), der im Betrieb unterhalb des/der Schneidbereichs/Schneidbereiche (36, 38) angeordnet ist.

6. Messerbalken nach Anspruch 5, **dadurch gekennzeichnet, dass** die Mulchbuckel (54) zwischen dem zweiten Schneidbereich (38) und dem Folgebereich (52) angeordnet sind bzw. dem zweiten Schneidbereich (38) nacheilend und dem Folgebereich (52) und/oder dem Mulchflügel (50) voreilend vorgesehen sind.

7. Messerbalken nach einem oder mehreren der vorherigen Ansprüche, **dadurch gekennzeichnet, dass** die Schneidbereiche (36, 38), Schneidkanten (36a, 38a), der Übergangsbereich, der Mulchbuckel (54) zumindest teilweise sanfte Übergänge aufweisen.

8. Mähgerät oder Mähwerk mit wenigstens einem Messerbalken(16) nach einem oder mehreren der vorherigen Ansprüche.

## Claims

1. Cutter bar (16), in particular for a mowing machine (10), having opposite end regions (40), having a cutting region (36) which leads during operation and has cutting edges (36a) and having trailing mulching wings (50) and having further cutting regions (38) having cutting edges (38a), wherein a transition region (44) is provided adjacent to the further cutting regions (38) and mulching humps (54) are provided adjacent to the cutting region(s) (36, 38), **characterized in that** the transition region has a depression, preferably adjacent to the mulching hump (54), in the manner of a downwardly extending corrugation.

2. Cutter bar according to Claim 1, **characterized in that** the further cutting regions (38) having cutting edges (38a) are arranged above the first cutting regions (36) and cutting edges (36a), respectively, during operation.

3. Cutter bar according to Claim 1 or 2, **characterized in that** the transition region (44) has no cutting edge.

4. Cutter bar according to one or more of the preceding claims, **characterized in that** the second cutting regions (38) face a central region (24) of the cutter bar (16) with respect to the first cutting regions (36).

5. Cutter bar according to one or more of the preceding claims, **characterized by** a trailing following region (52), which is arranged beneath the cutting region(s) (36, 38) during operation.

6. Cutter bar according to Claim 5, **characterized in that** the mulching humps (54) are arranged between the second cutting region (38) and the following region (52) or are provided in a manner trailing the second cutting region (38) and leading the following region (52) and/or the mulching wing (50).

7. Cutter bar according to one or more of the preceding claims, **characterized in that** the cutting regions (36, 38), cutting edges (36a, 38a), the transition region, the mulching hump (54) have at least partially smooth transitions.

8. Mowing machine or mower having at least one cutter bar (16) according to one or more of the preceding claims.

## Revendications

1. Barre porte-lames (16), en particulier pour une faucheuse (10), comprenant des zones d'extrémité opposées (40), une zone de coupe (36) en avant pendant le fonctionnement, munie d'arêtes de coupe (36a), et des ailes de paillage en arrière (50), ainsi que d'autres zones de coupe (38) munies d'arêtes de coupe (38a), une zone de transition (44) étant prévue en position adjacente aux autres zones de coupe (38), et des renflements de paillage (54) étant prévus en position adjacente à la ou aux zones de coupe (36, 38), **caractérisée en ce que** la zone de transition présente un renfoncement de préférence adjacent au renflement de paillage (54), à la manière d'une moulure s'étendant vers le bas.

2. Barre porte-lames selon la revendication 1, **caractérisée en ce que** les autres zones de coupe (38) sont disposées avec leurs arêtes de coupe (38a) pendant le fonctionnement au-dessus des premières zones de coupe (36) ou des arêtes de coupe (36a).

3. Barre porte-lames selon la revendication 1 ou 2, **caractérisée en ce que** la zone de transition (44) ne présente pas d'arête de coupe.

4. Barre porte-lames selon l'une quelconque ou plusieurs des revendications précédentes, **caractérisée en ce que** les deuxièmes zones de coupe (38) sont tournées vers une zone centrale (24) de la barre porte-lames (16) par rapport aux premières zones de coupe (36).

5. Barre porte-lames selon l'une quelconque ou plusieurs des revendications précédentes, **caractérisée par** une zone de suite (52) en arrière, qui, pendant le fonctionnement, est disposée sous la/les zone(s) de coupe (36, 38).

6. Barre porte-lames selon la revendication 5, **caractérisée en ce que** les renflements de paillage (54) sont disposés entre la deuxième zone de coupe (38) et la zone de suite (52) ou sont prévus en arrière de la deuxième zone de coupe (38) et en avant de la zone de suite (52) et/ou de l'aile de paillage (50).

7. Barre porte-lames selon l'une quelconque ou plusieurs des revendications précédentes, **caractérisée en ce que** les zones de coupe (36, 38), les arêtes de coupe (36a, 38a), la zone de transition, et le renflement de paillage (54) présentent au moins en partie des transitions douces.

8. Faucheuse comprenant au moins une barre porte-lames (16) selon l'une quelconque ou plusieurs des revendications précédentes.
